# EUROPÄISCHE PATENTSCHRIFT

(11) **EP 1 266 271 B1**
(45) Veröffentlichungstag und Bekanntmachung des Hinweises auf die Patenterteilung: **02.03.2005**
(21) Anmeldenummer: 00983268.4
(22) Anmeldetag: 09.12.2000
(51) Int. Cl.: G05D 1/03, G05D 1/02, B25J 5/00

(54) **VERFAHREN ZUM ERKENNEN, BESTIMMEN, LOKALISIEREN ZUMINDEST EINES BELIEBIGEN GEGENSTANDES UND/ODER RAUMES**
METHOD FOR RECOGNITION DETERMINATION AND LOCALISATION OF AT LEAST ONE ARBITRARY OBJECT OR SPACE
PROCEDE POUR DETECTER, DETERMINER, LOCALISER AU MOINS UN OBJET ET/OU UN ESPACE QUELCONQUE

(30) Priorität: 21.02.2000 DE 10007864
(43) Veröffentlichungstag der Anmeldung: 18.12.2002
(73) Patentinhaber: Wittenstein AG, 97999 Igersheim (DE)
(72) Erfinder: BAYER, Thomas, 97999 Igersheim (DE)
(74) Vertreter: Weiss, Peter, Dr.
(86) Internationale Anmeldenummer: PCT/EP2000/012458
(87) Internationale Veröffentlichungsnummer: WO 2001/063372

(56) Entgegenhaltungen:
- DE-A- 19 708 204
- DE-A- 19 744 488
- DE-U- 29 912 726
- US-A- 5 172 121
- US-A- 5 202 832

## Beschreibung

Die Erfindung betrifft ein Verfahren zum Erkennen, Bestimmen, Lokalisieren zumindest eines beliebigen Gegenstandes und/oder Raumes sowie zum. Aufnehmen des zumindest einen Gegenstandes mittels eines Roboters, insbesondere Serviceroboter, welcher auf einem Untergrund selbständig verfahren wird sowie ein System zum Durchführen des Verfahrens.

Derartige Verfahren sowie Systeme sind in vielfältigster Form und Ausführung auf dem Markt bekannt und gebräuchlich.

Insbesondere sind mobile Plattformen, Roboter, Serviceroboter od. dgl. bekannt, die mit äusserst aufwendigen Umgebungserfassungssystemen, wie beispielsweise Ultraschall-Scanner, Laserscanner od. dgl. bestückt sind.

Zudem beinhalten derartige mobile Plattformen Bildverarbeitungssysteme, um beispielsweise Gegenstände in Räumen zu erkennen, einzuscannen oder datenmässig zu erfassen. Ferner sind entsprechende mobile Plattformen bekannt, die Umwelt-Erkennungseinrichtungen aufweisen, um bestimmte Gegenstände od. dgl. zu erkennen.

Damit derartige mobile Plattformen sowie Roboter in unterschiedlichen Räumen selbständig verfahren werden können, sind diesen häufig Ortungssysteme zugeordnet. Diese sind ungenau und müssen oft neu justiert werden.

Zudem sind insbesondere bei derartigen Ortungssystemen exakte Steuerungen und insbesondere Programmierungen notwendig, um diese mobilen Plattformen, insbesondere Roboter an den gewünschten Ort zu bewegen. Häuffig sind derartige Roboter mit entsprechenden Bewegungssensoren versehen, um beispielsweise ein Hindernis zu erkennen.

Nachteilig bei den herkömmlichen mobilen Plattformen, insbesondere Roboter ist, dass derartige Umgebungserfassungssysteme, Bildverarbeitungssysteme sowie Ortungs- und Bewegungssysteme in vielfacher Form und Ausführung auf dem Markt zwar bekannt sind, jedoch diese aufgrund der Komplexität in der Technologie und den extrem hohen Herstellungskosten nicht marktfähig sind. Insbesondere für den Konsumenten, beispielsweise als Hilfe im Haushalt oder im Büro, eignen sich derartige mobile Plattformen keinesfalls, da sie zu teuer in der Anschaffung und zu aufwendig in der Bedienung sind.

Die US 5,202,832 beschreibt ein System zum Transportieren von Waren mit einem bewegbaren Modul, welches gegenüber einem zweiten Fahrzeug zum Übergeben von Waren verfahrbar ist. Damit die Fahrzeuge gegeneinander exakt bewegt werden können, sind mehrere verschiedene Systeme über Sender und Empfänger sowie über Laser und Barcodes erforderlich.

Die DE 299 12 726 und die US 5,172,121 beschreiben auf Schienen verfahrbare fahrerlose Fahrzeuge, die mit einem Transponderelement versehen sind, um an ganz bestimmten Positionen deren Position zu bestimmen.

Der vorliegenden Erfindung liegt die Aufgabe zugrunde, ein Verfahren sowie ein System zum Erkennen, Bestimmen, Lokalisieren zumindest eines beliebigen Gegenstandes und/oder Raumes zu schaffen, mit welchen die o.g. Nachteile beseitigt werden und mit welchen ein System, insbesondere ein Verfahren geschaffen wird, um auf einfache, exakte und kostengünstige Weise beliebige Gegenstände in einen beliebigen Raum aufzunehmen, an gewünschte Orte abzulegen oder bereitzustellen.

Zur Lösung dieser Aufgabe führen die Merkmale des Patentanspruches 1 sowie die des nebengeordneten Patentanspruches 9.

Bei der vorliegenden Erfindung wird jedem Raum zumindest ein Sensorelement, insbesondere Transponder zugeordnet, welcher eine ganz bestimmte Information ggf. verschlüsselt, enthält. Über diesen Schlüssel bzw. Code lässt sich in einem Roboter, insbesondere Serviceroboter ein zugehöriger Raum einprogrammieren, was insbesondere seine Raumkoordinaten oder Koordinaten feststehender Einrichtungen, Regale, Betten od. dgl. betrifft. Auf diese Weise sendet das Sensorelement diese Koordinaten ggf. über den Code als Informationen an den Roboter, der sich dann aufgrund der Raumkoordinaten in diesem Raum aufgrund des Signales des Sensorelementes bzw. Transponders orientieren und bewegen kann. Aufgrund der Lage zum Transponder erkennt der Roboter, wie er sich im Raum bewegen kann. Die Raumkoordinaten können in Roboter abgelegt sein und lediglich durch das Sensorelement aktiviert werden.

Zudem ist von Vorteil bei der vorliegenden Erfindung, dass jedem beliebigen, beispielsweise im Haushalt oder Büro befindlichen Gegenstand ein Transponder zugeordnet wird, der ebenfalls einen bestimmten Schlüssel enthält.

Der Transponder sendet diesen Schlüssel an den Roboter. Dort sind die einzelnen Gegenstände datenmässig abgelegt, was insbesondere die Bezeichnung des Gegenstandes, seine Grösse, sein Gewicht, ggf. seine Transportlage betrifft. Hierdurch kann der Roboter genau erkennen, wo und an welchem Ort sich in einem Raum welcher Gegenstand befindet.

Soll der eine oder andere Gegenstand aufgenommen werden, kann der Roboter entsprechend selbständig verfahren werden, wobei entsprechend andere sich ggf. im Weg befindliche Gegenstände durch den Roboter weggeräumt werden oder die feststehenden Gegenstände wie beispielsweise Tische, durch die räumlichen Grössenkoordinaten, die vom Roboter erkannt werden, umfahren werden.

Hierdurch kann auf einfache und sehr kostengünstige Weise jeder beliebige Gegenstand erkannt, lokalisiert und zugeordnet werden und vom Roboter, insbesondere von seiner Greifeinrichtung aufgenommen werden.

Auch ist es möglich über den Roboter einen bestimmten Gegenstand, der vermisst wird, aufzufinden, indem der Gegenstand ein entsprechendes Signal an den Roboter sendet und auf diese Weise der Raum, in welchem sich der Gegenstand befindet, lokalisiert werden kann.

Auch kann ein derartiger Roboter dazu benutzt werden, bestimmte Handlungen und Arbeitsschritte vorzunehmen, wie beispielsweise im Haushalt oder Büro aufzuräumen, Tisch zu decken und dies in wählbaren und programmierbaren Schritten.

Er kann beispielsweise einzelne Teller aus einem Regal oder aus einem Schrank entnehmen, diese auf einen Tisch auflegen, entsprechende Tassen od. dgl., hinzustellen etc.. Beispielsweise nach einem Essen kann der Roboter auf ein entsprechendes Signal hin den Tisch abräumen, ggf. die Spülmaschine einräumen und nach dem Spülen wieder ausräumen od. dgl.. Hier sei der Erfindung keine Grenze gesetzt.

Auch hat sich als besonders vorteilhaft erwiesen, jedem Gegenstand zumindest zwei Sensorelemente, insbesondere Transponder zuzuordnen.

Hierdurch kann ein beliebiger Gegenstand, insbesondere eine Transportlage des Gegenstandes genau definiert und bestimmt werden, da zwei unterschiedliche Vektoren die Signale dem Roboter, insbesondere Serviceroboter übermitteln.

Aufgrund dieser beiden Vektoren ist der Gegenstand, insbesondere die Lage sowie auch eine Transportlage jedes beliebigen Gegenstandes exakt und genau bestimmbar.

Hierzu kann beispielsweise ein Buch durch den Roboter von einem Tisch aufgenommen und richtig, mit dem Buchrücken nach aussen in ein Regel eingestellt werden. Dabei sind die einzelnen Transponder so weit wie möglich ggf. auf unterschiedlichen Seiten des Gegenstandes entfernt angeordnet. Auch soll daran gedacht sein, eine Mehrzahl von entsprechenden Sensorelementen, insbesondere Transpondern dem Gegenstand zuzuordnen, um dessen Transportlage exakt bestimmten zu können.

Bei der vorliegenden Erfindung ist ein sogenanntes "Local Positioning System" geschaffen, mit welchem die Gegenstände mittels des Senders bzw. Sensorelementes lokalisiert und geortet werden können.

Dabei kann beispielsweise der Sender, insbesondere das Sensorelement in jedem Raum vorgesehen oder angeordnet sein, wobei beispielsweise ein Empfänger mit einem Personal Computer verbunden ist.

Insbesondere kann dieses System auch direkt ohne einen sogenannten Serviceroboter an einem Personal Computer angeschlossen werden, um einzelne Gegenstände in einem Raum aufzufinden.

Zudem können bestimmte Informationen über die Gegenstände, wie die o.g. beschriebenen Parameter, beispielsweise auch mittels eines Personal Computers eingegeben und definiert werden.

Dabei soll auch im Rahmen der vorliegenden Erfindung liegen, beispielsweise feststehende Gegenstände oder die Koordinaten eines oder mehrerer Räume in den PC einzugeben. Insbesondere kann eine Trennung der feststehenden Gegenstände sowie der Räume mit entsprechend feststehenden Gegenständen zu beweglichen Gegenständen erfolgen.

Alle feststehenden Gegenstände sowie auch die Koordinaten jedes einzelnen Raumes können vorab beispielsweise in den Computer und/oder in den Serviceroboter eingegeben werden. Dieser erkennt dann exakt, wo er sich entlang bewegen kann und erkennt die Koordinaten von feststehenden Gegenständen als Hindernisse sowie die einzelnen Räume zum Bewegen.

Zudem können sämtliche bewegliche Gegenstände im Personal Computer, beispielsweise einmalig manuell und/oder automatisch eingegeben werden.

Über entsprechende Scanner oder Barcodes können diese Informationen auch datenmässig direkt in einen Computer eingegeben werden, was inbesondere die Parameter Grösse, Gewicht, Transportlage, Ablageplatte, Bezeichnung des Gegenstandes etc. betrifft.

Bei dem vorliegenden "Local-Positioning-System" kann sowohl der Roboter als auch das Auffinden von Gegenständen und Bestimmen bestimmter Orte von Gegenständen zentral, beispielsweise von einem Personal Computer aus gesteuert werden.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf ein erfindungsgemässes System zum Erkennen, Bestimmen und Lokalisieren eines beliebigen Gegenstandes und/oder Raumes mittels eines Roboters;
Figur 2 eine schematisch dargestellte Seitenansicht auf das System gemäss Figur 1 als weiteres Ausführungsbeispiel;
Figur 3 eine schematisch dargestellte Draufsicht auf eine Mehrzahl von Räumen, in welchen ein Roboter, insbesondere ein Serviceroboter verfahrbar ist;

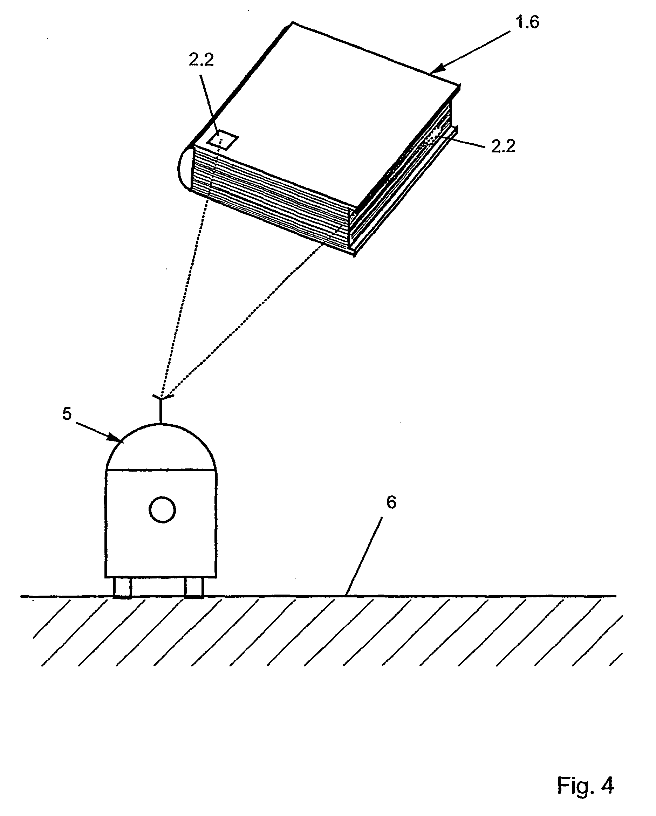

Figur 4 eine zumindest teilweise perspektivisch dargestellte Ansicht eines Gegenstandes, bestückt mit entsprechenden Sensorelementen, insbesondere Transpondern.

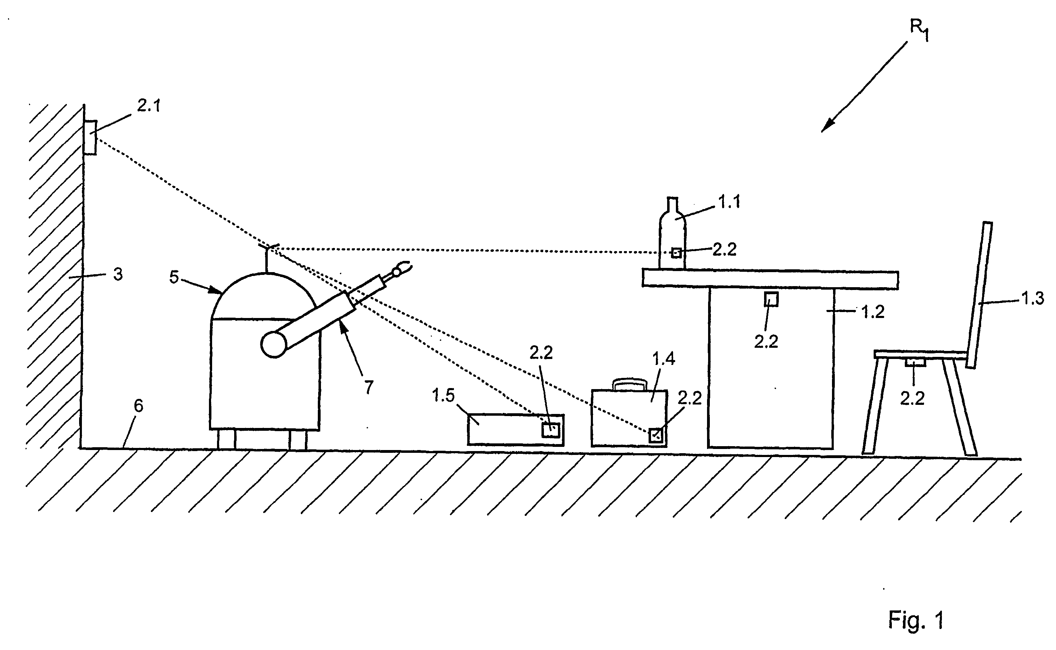

Gemäss Figur 1 weist ein erfindungsgemässes System R₁ zum Erkennen, Bestimmen und Lokalisieren zumindest eines beliebigen Gegenstandes 1.1 bis 1.5 ein zentrales Sensorelement 2.1, insbesondere Sender auf, welches beispielsweise an einer Wand 3 in einem Raum 4 angeordnet sein kann.

In dem Raum 4 ist ein Roboter 5 auf einem Untergrund 6 verfahrbar angeordnet. Der Roboter 5, insbesondere Serviceroboter ist selbständig verfahrbar und mit zumindest einer Greifeinrichtung 7 versehen.

Bei der vorliegenden Erfindung ist ferner von Bedeutung, dass jedem Gegenstand 1.1 bis 1.5 zumindest ein Sensorelement 2.2, insbesondere Transponder, zugeordnet ist.

In dem Transponder sind ein bestimmter Code, Zahlencode, Ziffern od. dgl. abgelegt, wobei bei Aussendung eines entsprechenden Signales durch den Roboter dieser Code durch den Transponder gesendet wird.

Für jeden spezifischen Transponder bzw. Code ist in dem Roboter 5 eine entsprechende Zuordnung eines Gegenstandes 1.1 bis 1.5 datenmässig abgelegt. Über das Sensorelement 2.2 kann jeder beliebige Gegenstand 1.1 bis 1.5 im Roboter 5 datenmässig, was insbesondere die Paramter der Gegenstände 1.1 bis 1.5 Bezeichnung, Grösse, Gewicht, Transportlage, Abmasse etc. betrifft, abgelegt werden.

Dabei kann jedem Sensorelement 2.2 jedes beliebigen Gegenstandes 1.1 bis 1.5, beispielsweise eine Bezeichnung des Gegenstandes 1.1 bis 1.5 zugeordnet werden sowie auch eine Ablageposition in einem beliebigen Raum 4, in welchem sich der Gegenstand gewöhnlich befindet. Insbesondere auch durch die Ablage der Grössendaten, insbesondere die Grössenmasse des Gegenstandes 1.1 bis 1.5 sowie die Möglichkeit über das Sensorelement 2.2, insbesondere den Transponder zu erkennen, wo sich der Gegenstand 1.1 bis 1.5 im Raum befindet, erkennt der Roboter 5, wie er zu dem ausgewählten Gegenstand 1.1 bis 1.5 gelangen kann, ohne dass entsprechende, nicht gekennzeichnete Hindernisse oder bliebige andere Gegenstände im Weg liegen.

Insbesondere durch die Zuordnung beispielsweise eines Grössenfensters für jeden Gegenstand beispielsweise als Tisch erkennt der Roboter 5 in dem Raum 4, wo der Tisch steht, dass er um diesen herum fahren kann, um beispielsweise einen beliebigen anderen Gegenstand 1.1 frei zugänglich mittels der Greifeinrichtung 7 zu entnehmen, und um beispielsweise diesen Gegenstand an einem anderen Ort abzulegen.

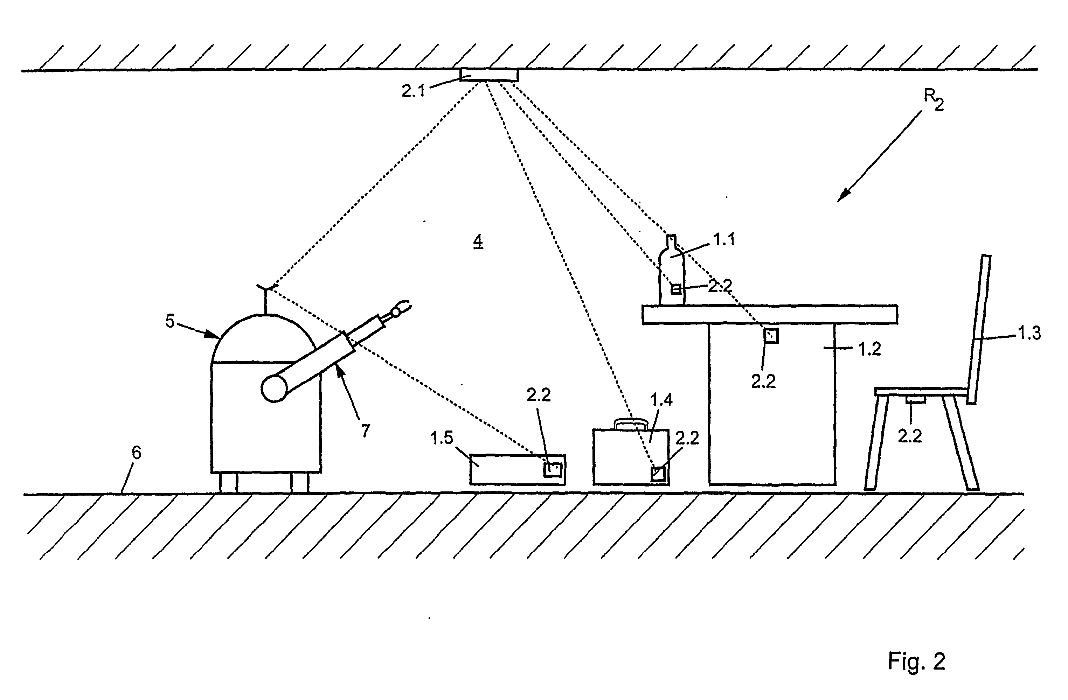

In dem Ausführungsbeispiel der vorliegenden, Erfindung gemäss Figur 2 ist ein System R₂ aufgezeigt, bei welchem zentral über ein Sensorelement 2.1 dem Roboter 5 die Koordinaten des Raumes 5 übermittelt werden, so dass dieser im Raum 5 sämtliche Abmasse des Raumes erkennt und sich hier an einem Verfahren orientieren kann.

Zudem bekommt er über das Sensorelement 2.1, insbesondere den Sender das entsprechende Signal für einen spezifischen Raum und insbesondere die Raumkoordinaten.

Gleichzeitig kann über das Sensorelement 2.1 auch jeder beliebige Gegenstand 1.1 bis 1:5 lokalisiert, erkannt und insbesondere an den Roboter 5 weitergeleitet werden.

Hierdurch wird in oben beschriebener Weise jeder Gegenstand erkannt, die Grösse und den Ort des Gegenstandes im Raum 4 bzw. auf dem Untergrund 6 lokalisiert, um diesen beispielsweise, wenn es gewünscht sein sollte aufzunehmen und an einen bestimmten und wählbaren Platz abzulegen.

Ebenfalls kann über die Lokalisierung der einzelnen Gegenstände 1.4 sowie 1.5, wie beispielsweise in Figur 5 aufgezeigt, der Roboter 5 an den einzelnen Gegenständen vorbeifahren, da dessen Grösse bzw. dessen Grössenkoordinaten und Position bekannt sind.

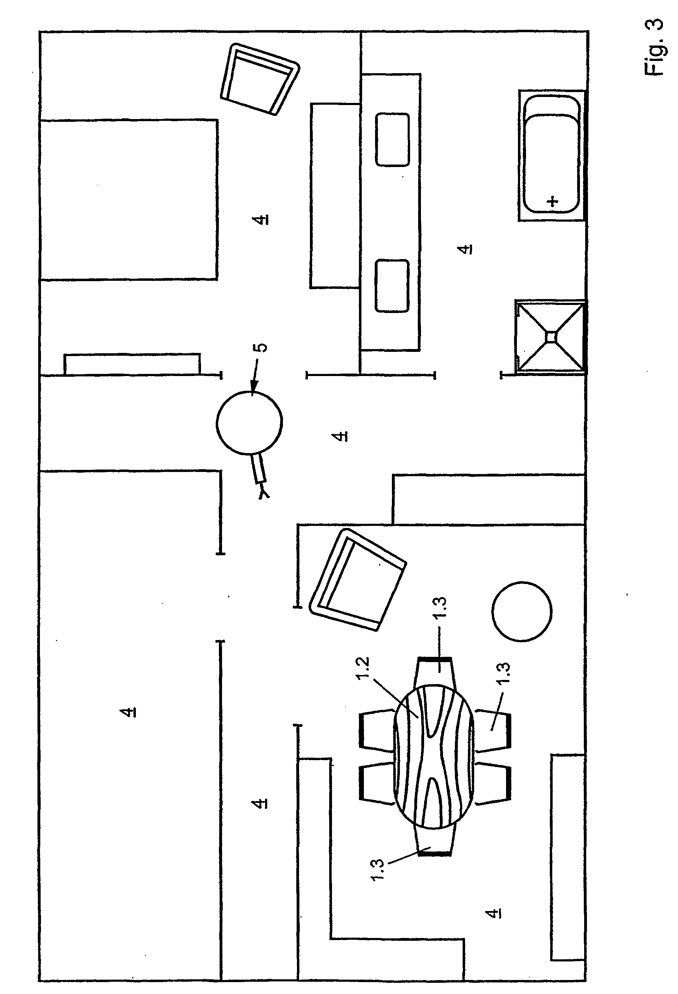

Auch ist es möglich, um einen bestimmten Gegenstand 1.4 heranzukommen, beispielsweise den Gegenstand 1.5 vorher wegzunehmen oder zur Seite zu legen. Entsprechend ist in Figur 3 dargestellt, wie der Roboter 5 durch die einzelnen Räume 4 sich frei bewegen kann, wobei aufgrund der einzelnen hier nicht näher dargestellten Sensorelemente 2.1 in jedem Raum spezifisch diese Koordinaten eines einzelnen Raumes dem Roboter 5 zur Verfügung gestellt werden.

Hierdurch kann sich der Roboter 5 über diese Koordinaten, die ggf. vorher eingegeben werden können, in jedem einzelnen Raum orientieren. Über die einzelnen Sensorelemente 2.2, wie sie hier nicht dargestellt sind, lässt sich jeder beliebige Gegenstand 1.1 bis 1.5 erkennen und orten, so dass er um diese Gegenstände herumfahren oder diese aufnehmen kann, wenn dies gewünscht ist.

Damit eine bestimmte Lage und Position einerseits zum Aufnehmen des Gegenstandes 1.1 bis 1.5 sowie eine bestimmte Lage zum Transportieren, insbesondere Transportlage erkannt werden kann, hat es sich als besonders vorteilhaft erwiesen, einen Gegenstand 1.6 beispielsweise mit zwei Sensorelementen 2.2 zu bestücken, die an unterschiedlichen Orten des Gegenstandes 1.6 angeordnet sind.

Dabei liegen die beiden Sensorelemente 2.2, die ein und denselben Gegenstand 1.6 codiert definieren, jedoch an unterschiedliche sowie wie möglich auseinanderliegenden Positionen, so dass hierdurch eine exakte Lokalisierung und Positionierung des Gegenstandes 1.6 möglich ist.

Hierdurch kann beispielsweise ein Aufnehmen des Gegenstandes sehr leicht erfolgen und insbesondere ein Ablegen, beispielsweise des Gegenstandes 1.6 als Buch in einem Bücherregal auf diese Weise einfach geschehen kann.

Auf diese Weise bekommt der Roboter 5, insbesondere Serviceroboter die Information, den Gegenstand 1.6 nahe des Transponders 2.2 aufzunehmen, insbesondere im Bereich eines Buchrückens, um dieses dann, beispielsweise in ein Bücherregal abzulegen.

Bei der vorliegenden Erfindung kann softwaregesteuert jedem beliebigen Gegenstand 1.1 bis 1.6 ein beliebiger Ablageplatz zugewiesen werden. Über einen entsprechenden Befehl hin kann der Roboter 5 dann die einzelnen Gegenstände 1.1 bis 1.6, die sich nicht an ihrem Ort, insbesondere an ihrem Raum, an welchem sie sich befinden sollten, aufsuchen und dort ablegen.

Hierdurch lassen sich Aufräumarbeiten wesentlich erleichtern. Zudem ist von wesentlicher Bedeutung bei der vorliegenden Erfindung, dass beispielsweise ein Auffinden oder ein Aufsuchen eines bestimmten gewünschten Gegenstandes sehr einfach ist.

Dabei wird lediglich der Gegenstand in den Roboter eingegeben. Dieser kann vom Roboter leicht geortet oder dessen Position in Raum 4 an einem Display angezeigt werden. Dies soll ebenfalls im Rahmen der vorliegenden Erfindung liegen.

### Positionszahlenliste

| | | | | | |
|---|---|---|---|---|---|
| 1 | Gegenstand | 34 | | 67 | |
| 2 | Sensorelement | 35 | | 68 | |
| 3 | Wand | 36 | | 69 | |
| 4 | Raum | 37 | | 70 | |
| 5 | Roboter | 38 | | 71 | |
| 6 | Untergrund | 39 | | 72 | |
| 7 | Greifeinrichtung | 40 | | 73 | |
| 8 | | 41 | | 74 | |
| 9 | | 42 | | 75 | |
| 10 | | 43 | | 76 | |
| 11 | | 44 | | 77 | |
| 12 | | 45 | | 78 | |
| 13 | | 46 | | 79 | |
| 14 | | 47 | | | |
| 15 | | 48 | | | |
| 16 | | 49 | | R₁ | System |
| 17 | | 50 | | R₂ | System |
| 18 | | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zum Erkennen, Bestimmen, Lokalisieren zumindest eines beliebigen Gegenstandes und/oder Raumes sowie zum Aufnehmen des zumindest einen Gegenstandes mittels eines Roboters, insbesondere Serviceroboter, welcher auf einem Untergrund selbständig verfahren wird,
**dadurch gekennzeichnet,**
**dass** zur Orientierung des Roboters in einem Raum diesem über ein Sensorelement, insbesondere Transponder oder Sender, Raumkoordinaten der beliebigen Gegenstände im Raum und gegenstandsspezifische Koordinaten bezogen auf die beliebigen Gegenstände übermittelt werden.

2. Verfahren nach Anspruch 1, **dadurch gekennzeichnet, dass** zum Erkennen und Lokalisieren und/oder Erkennen einer Lage des zumindest einen beliebigen Gegenstandes, dieser mit zumindest einem Sensorelement, insbesondere Transponder bestückt wird.

3. Verfahren nach Anspruch 1 oder 2, **dadurch gekennzeichnet, dass** über den Transponder spezifische Parameter des beliebigen Gegenstandes, wie Ort, Lage, Transportlage, Gewicht, Grösse, Art und Bezeichnung des Gegenstandes, übermittelt werden.

4. Verfahren nach wenigstens einem der Ansprüche 1 bis 3, **dadurch gekennzeichnet, dass** jeder Raum, insbesondere jeder Gegenstand mit wenigstens einem Sensorelement, insbesondere Transponder bestückt wird, wobei dem jeweiligen Sensorelement formspezifische und/oder gegenstandsspezifische Daten, insbesondere Koordinaten, wie Grösse, Lage, Gewicht, Art und Bezeichnung des Gegenstandes oder Raumes eingegeben, ggf. verschlüsselt eingegeben werden.

5. Verfahren nach Anspruch 4, **dadurch gekennzeichnet, dass** über das Sensorelement bzw. über den Transponder oder Sender die raum- bzw. gegenstandspezifischen Daten an den Serviceroboter übermittelt werden, welcher diese Daten zum selbständigen Bewegen in einem Raum, um beliebige Gegenstände aufzunehmen oder abzulegen oder zu entnehmen, auswertet, wobei über die raumspezifischen Daten der Roboter deren Lage selbst berechnet.

6. Verfahren nach wenigstens einem der Ansprüche 1 bis 5, **dadurch gekennzeichnet, dass** zum Erkennen einer bestimmten Lage eines beliebigen Gegenstandes, diesem an unterschiedlichen Positionen zumindest zwei Sensorelemente, insbesondere Transponder zugeordnet werden.

7. Verfahren nach wenigstens einem der Ansprüche 1 bis 6, **dadurch gekennzeichnet, dass** über eine Mehrzahl von Sensorelementen, insbesondere Transponder an den beliebigen Gegenständen, unterschiedliche Vektoren in Form von Signalen an den Roboter übermittelt werden, um eine bestimmte Lage des Gegenstandes zu erkennen, diese aufzunehmen, ggf. in eine Transportlage zu bringen und anschliessend an einem beliebig gewünschten Ort abzulegen.

8. Verfahren nach wenigstens einem der Ansprüche 1 bis 7, **dadurch gekennzeichnet, dass** die raum- und/oder gegenstandspezifischen Daten, wie Koordinaten des Raumes, Grösse des Raumes, Grösse, Gewicht, Transportlage sowie Ablageort des Gegenstandes im Roboter abgespeichert werden und ein hierauf entsprechend passender Zuordnungscode im Sensorelement, insbesondere im Transponder abgelegt wird, wobei feststehende Gegenstände und/oder Räume als feste Grössen im Roboter und/oder in einem PC zur Bestimmung eines möglichen Verfahrweges eingegeben werden.

9. System zum Erkennen, Bestimmen, Lokalisieren zumindest eines beliebigen Gegenstandes (1.1 bis 1.6) und/oder Raumes (4) sowie zum Aufnehmen des Gegenstandes (1.1 bis 1.6) mittels eines Roboters (5), insbesondere Serviceroboter, welcher auf einem beliebigen Untergrund (6) selbständig verfahrbar ist, **dadurch gekennzeichnet, dass** zur Orientierung des Roboters (6) in einem Raum (4) diesem ein Sensorelement (2.1), insbesondere Sender zum Erkennen von Raumkoordinaten der beliebigen Gegenstände (1.1 bis 1.6) im Raum (4) und gegenstandsspezifischen Koordinaten bezogen auf den beliebigen Gegenstand (1.1 bis 1.6) mit zugeordnetem Sensorelement (2.2) im Raum (4) zugeordnet ist.

10. System nach Anspruch 9, **dadurch gekennzeichnet, dass** zum Erkennen von Ortskoordinaten und zum Erkennen einer Grösse eines beliebigen Gegenstandes (1.1 bis 1.6), diesem ein Sensorelement (2.2), insbesondere Transponder zugeordnet ist.

11. System nach Anspruch 9 oder 10, **dadurch gekennzeichnet, dass** in dem zumindest einen Sensorelement (2.1, 2.2), insbesondere Transponder (2.2) oder Sender (2.1) kodierte Raumkoordinaten für den Roboter (5) und Koordinaten über den beliebigen Gegenstand (1.1 bis 1.6), wie Grösse, Gewicht, Transportlage, Ablageort abgelegt sind.

12. System nach wenigstens einem der Ansprüche 9 bis 11, **dadurch gekennzeichnet, dass** durch die Zuordnung jedes beliebigen Gegenstandes (1.1 bis 1.6) mit zumindest einem Sensorelement (2.2), insbesondere Transponder, ein Lokalisieren des Gegenstandes (1.1 bis 1.6) in einem beliebigen Raum (4) selbständig durch den Roboter (5) oder Serviceroboter erfolgt.

13. System nach wenigstens einem der Ansprüche 9 bis 12, **dadurch gekennzeichnet, dass** durch Zuordnung von zumindest zwei Sensorelemente (2.2), insbesondere Transponder unterschiedlichen Positionen eines beliebigen Gegenstandes (1.1 bis 1.6) ein Erkennen einer Lage, insbesondere einer Transportlage des Gegenstandes (1.1 bis 1.6) sowie auch einer Lage zum Ablegen des Gegenstandes (1.1 bis 1.6) durch zumindest zwei unterschiedliche Ortsvektoren ermöglicht ist.

## Claims

1. Method of recognising, determining and localising at least one particular article and/or area, as well as of picking-up the at least one article by means of a robot, more especially a service robot, which is displaced independently on a base, **characterised in that**, for the orientation of the robot in an area, spatial co-ordinates of the particular articles in the area and co-ordinates specific to the article relating to the particular articles are transmitted to said robot via a sensor element, more especially a transponder or transmitter.

2. Method according to claim 1, **characterised in that**, for recognising and localising and/or recognising a position of the at least one particular article, said article is fitted with at least one sensor element, more especially a transponder.

3. Method according to claim 1 or 2, **characterised in that** specific parameters of the particular article, such as location, position, transportation position, weight, size, type and designation of the article, are transmitted via the transponder.

4. Method according to at least one of claims 1 to 3, **characterised in that** each area, more especially each article, is fitted with at least one sensor element, more especially a transponder, data, more especially co-ordinates, specific to the shape and/or specific to the article, such as size, position, weight, type and designation of the article or area, being input, possibly input in an encoded manner, to the respective sensor element.

5. Method according to claim 4, **characterised in that**, via the sensor element or respectively via the transponder or transmitter, the data specific to the area or respectively to the article are transmitted to the service robot, which evaluates these data for independent displacement in an area, in order to pick up or deposit or remove particular articles, the robot itself calculating the position of said articles via the data specific to the area.

6. Method according to at least one of claims 1 to 5, **characterised in that**, for recognising a specific position of a particular article, at least two sensor elements, more especially transponders, are associated with said article at different positions.

7. Method according to at least one of claims 1 to 6, **characterised in that**, via a plurality of sensor elements, more especially transponders, on the particular articles, different vectors in the form of signals are transmitted to the robot, in order to recognise a specific position of the article, to pick this up, possibly to bring it into a transportation position and subsequently to deposit it at a particularly desirable location.

8. Method according to at least one of claims 1 to 7, **characterised in that** the data specific to the area and/or to the article, such as co-ordinates of the area, size of the area, size, weight, transportation position as well as depositing location of the article, are stored in the robot, and an allocation code corresponding thereto is deposited in the sensor element, more especially in the transponder, stationary articles and/or areas being input as fixed sizes in the robot and/or in a PC for determining a possible travel path.

9. System for recognising, determining and localising at least one particular article (1.1 to 1.6) and/or area (4), as well as for picking-up the article (1.1 to 1.6) by means of a robot (5), more especially a service robot, which is displaceable independently on a particular base (6), **characterised in that**, for the orientation of the robot (6) in an area (4), a sensor element (2.1), more especially a transmitter, is associated with said robot for recognising spatial co-ordinates of the particular articles (1.1 to 1.6) in the area (4) and co-ordinates specific to the article relating to the particular article (1.1 to 1.6) with an associated sensor element (2.2) in the area (4).

10. System according to claim 9, **characterised in that**, for recognising location co-ordinates and for recognising a size of a particular article (1.1 to 1.6), a sensor element (2.2), more especially a transponder, is associated with said article.

11. System according to claim 9 or 10, **characterised in that** coded spatial co-ordinates for the robot (5) and co-ordinates relating to the particular article (1.1 to 1.6), such as size, weight, transportation position and depositing location, are deposited in the at least one sensor element (2.1, 2.2), more especially transponder (2.2) or transmitter (2.1).

12. System according to at least one of claims 9 to 11, **characterised in that**, through the association of each particular article (1.1 to 1.6) with at least one sensor element (2.2), more especially a transponder, the article (1.1 to 1.6) is localised in a particular area (4) independently by the robot (5) or service robot.

13. System according to at least one of claims 9 to 12, **characterised in that**, through the association of at least two sensor elements (2.2), more especially transponders, with different positions of a particular article (1.1 to 1.6), recognition of a position, more especially of a transportation position, of the article ( 1.1 to 1.6), and also a position for depositing the article (1.1 to 1.6), is rendered possible by at least two different location vectors.

## Revendications

1. Procédé pour détecter, déterminer, localiser au moins un objet et/ou un espace quelconque ainsi que pour soulever l'au moins un objet au moyen d'un robot, en particulier robot de service, qui se déplace de manière autonome sur un fond,
**caractérisé par le fait**
**que**, pour l'orientation du robot dans un espace, il est transmis à ce dernier, par l'intermédiaire d'un élément capteur, en particulier transpondeur ou émetteur, des coordonnées spatiales des objets quelconques dans l'espace et des coordonnées spécifiques à l'objet sur base des objets quelconques.

2. Procédé selon la revendication 1, **caractérisé par le fait que**, pour détecter et localiser et/ou pour détecter une position de l'au moins un objet quelconque, celui-ci est équipé d'au moins un élément capteur, en particulier transpondeur.

3. Procédé selon la revendication 1 ou 2, **caractérisé par le fait que** par l'intermédiaire du transpondeur sont transmis des paramètres spécifiques de l'objet quelconque, tels que lieu, position, position de transport, poids, grandeur, type et dénomination de l'objet.

4. Procédé selon au moins l'une des revendications 1 à 3, **caractérisé par le fait que** chaque espace, en particulier chaque objet, est équipé d'au moins un élément capteur, en particulier transpondeur, dans l'élément capteur respectif étant entrées, éventuellement entrées de manière cryptée, des données spécifiques à la forme et/ou spécifiques à l'objet, en particulier des coordonnées, telles que grandeur, position, poids, type et dénomination de l'objet ou de l'espace.

5. Procédé selon la revendication 4, **caractérisé par le fait que**, par l'intermédiaire de l'élément capteur ou par l'intermédiaire du transpondeur ou émetteur, les données spécifiques à l'espace ou à l'objet sont transmises au robot de service qui évalue ces données pour se déplacer de manière autonome dans un espace, pour soulever ou déposer ou prélever des objets quelconques, le robot calculant lui-même leur position par l'intermédiaire des données spécifiques à l'espace.

6. Procédé selon au moins l'une des revendications 1 à 5, **caractérisé par le fait que**, pour détecter une position déterminée d'un objet quelconque, il est associé à ce dernier, en des positions différentes, au moins deux éléments capteurs, en particulier transpondeurs.

7. Procédé selon au moins l'une des revendications 1 à 6, **caractérisé par le fait que**, par l'intermédiaire d'une pluralité d'éléments capteurs, en particulier transpondeurs, aux objets quelconques, des vecteurs différents sont transmis sous forme de signaux au robot, pour détecter une position déterminée de l'objet, le soulever, éventuellement l'amener en une position de transport et le déposer ensuite en un lieu souhaité quelconque.

8. Procédé selon au moins l'une des revendications 1 à 7, **caractérisé par le fait que** les données spécifiques à l'espace et/ou à l'objet, telles que coordonnées de l'espace, grandeur de l'espace, grandeur, poids, position de transport ainsi que lieu de dépôt de l'objet, sont mémorisées dans le robot et qu'un code d'association approprié correspondant est entré dans l'élément capteur, en particulier dans le transpondeur, les objets et/ou espaces stationnaires étant entrés comme grandeurs fixes dans le robot et/ou dans un PC, pour déterminer un possible trajet de déplacement.

9. Système pour détecter, déterminer, localiser au moins un objet (1.1 à 1.6) et/ou espace (4) quelconque ainsi que pour soulever l'objet (1.1 à 1.6) au moyen d'un robot (5), en particulier robot de service, qui se déplace de manière autonome sur un fond (6), **caractérisé par le fait que**, pour l'orientation du robot (6) dans un espace (4), il est associé à ce dernier un élément capteur (2.1), en particulier émetteur, destiné à reconnaître des coordonnées spatiales des objets quelconques (1.1 à 1.6) dans l'espace (4) et des coordonnées spécifiques à l'objet sur base de l'objet quelconque à élément capteur (2.2) associé dans l'espace (4).

10. Système selon la revendication 9, **caractérisé par le fait que**, pour détecter des coordonnées de lieu et pour détecter une grandeur d'un objet quelconque (1.1 à 1.6), il est associé à ce dernier un élément capteur (2.2), en particulier transpondeur.

11. Système selon la revendication 9 ou 10, **caractérisé par le fait que** dans l'au moins un élément capteur (2.1, 2.2), en particulier transpondeur (2.2) ou émetteur (2.1) sont entrées des coordonnées spatiales codées pour le robot (5) et des coordonnées sur l'objet quelconque (1.1 à 1.6), telles que grandeur, poids, position de transport, lieu de dépôt.

12. Système selon au moins l'une des revendications 9 à 11, **caractérisé par le fait que** par l'association de tout objet quelconque (1.1 à 1.6) à au moins un élément capteur (2.2), en particulier transpondeur, a lieu une localisation de l'objet (1.1 à 1.6) dans un espace quelconque (4) de manière autonome par le robot (5) ou robot de service.

13. Système selon au moins l'une des revendications 9 à 12, **caractérisé par le fait que** par l'association d'au moins deux éléments capteurs (2.2), en particulier transpondeurs, en des positions différentes d'un objet quelconque (1.1 à 1.6) est possible une détection d'une position, en particulier d'une position de transport de l'objet (1.1 à 1.6) ainsi que d'une position pour déposer l'objet (1.1 à 1.6) par au moins deux vecteurs de lieu différents.
